# EUROPÄISCHE PATENTSCHRIFT

(11) **EP 0 841 780 B1**
(45) Veröffentlichungstag und Bekanntmachung des Hinweises auf die Patenterteilung: **22.12.2004**
(21) Anmeldenummer: 97117364.6
(22) Anmeldetag: 08.10.1997
(51) Int. Cl.: H04L 12/43, H04J 3/06, B60R 16/02, H04L 29/02, H04L 7/00, H04L 12/42

(54) **Verfahren zur Kompensation von Laufzeitverzögerungen in einem ringförmigen Kommunikationsnetz**
Compensation method for the propagation delay in a ring network
Méthode de compensation du délai de propagation dans un réseau de communication en anneau

(30) Priorität: 11.10.1996 DE 19642264
(43) Veröffentlichungstag der Anmeldung: 13.05.1998
(73) Patentinhaber: Harman Becker Automotive Systems GmbH, 76307 Karlsbad (DE); Silicon Systems GmbH Multimedia Engineering, 76133 Karlsruhe (DE)
(72) Erfinder: Stiegler, Andreas, 76275 Ettlingen (DE); Hetzel, Herbert, 76889 Schwaigern (DE); Heck, Patrick, 76448 Durmersheim (DE)
(74) Vertreter: Patentanwälte Westphal, Mussgnug & Partner

(56) Entgegenhaltungen:
- EP-A- 0 511 786
- EP-A- 0 511 861
- DE-A- 19 603 821
- US-A- 5 386 478

## Beschreibung

Die Erfindung betrifft ein Verfahren zur Kompensation von Laufzeitverzögerungen in einem Kommunikationsnetz mit mehreren Teilnehmern, wie es beispielsweise der DE 196 03 821 A1 zu entnehmen ist. Jeder Teilnehmer ist mit einer Ringleitung zur gemeinsamen Übertragung von digitalen Quell- und Steuerdaten in einem zu einem Taktsignal synchronen Datenstrom verbunden, wobei die Quell- und Steuerdaten in einem Format übertragen werden, welches eine getaktete Folge von einzelnen Bitgruppen gleicher Länge vorschreibt, die Teil-Bitgruppen enthalten, die jeweils einen Datenkanal für Quell- oder Steuerdaten bilden. Wenigstens zwei Teilnehmer, die an verschiedenen Stellen mit der Ringleitung verbunden sind, empfangen Quelldaten, die von einem der Teilnehmer auf verschiedenen Datenkanälen gesendet werden und die miteinander korreliert sind. Bestimmte Bitpositionen in jeder Bitgruppe werden für einen Zählwert reserviert, der von Teilnehmer zu Teilnehmer weitergereicht wird, wobei der Zählwert durch einen der Teilnehmer stets auf einen festen Anfangswert gesetzt und durch jeden nachfolgenden Teilnehmer entlang der Ringleitung inkrementiert wird. Weiterhin ist die Erfindung auf die Verwendung eines solchen Verfahrens gerichtet.

Ein ringförmiges Kommunikationsnetz, wie es beispielsweise in der EP-A-0 725 522 beschrieben ist, dient zur Vernetzung verschiedenartiger elektrischer und elektronischer Geräte, die in teilweise komplizierter Weise untereinander Informationen austauschen sollen, mit Hilfe von physisch einfach aufgebauten Datenleitungen. Über diese Datenleitungen können die Teilnehmer sowohl Quelldaten als auch Steuerdaten austauschen. Beispielsweise im Audiobereich können Audiodaten von Datenquellen wie CD-Spielern, Radioempfängern und Kassettenrecordern an Datensenken wie Verstärker-Lautsprecher-Kombinationen übertragen werden, und gleichzeitig können Steuerdaten übertragen werden, beispielsweise zur Steuerung der Lautstärke. Dabei kann ein Gerät gleichzeitig als Datenquelle und -senke ausgebildet sein, wie es beispielsweise bei einem Kassettenrecorder der Fall ist.

Beim Auslesen der Quell- und Steuerdaten aus der Ringleitung, ihrer Zwischenverstärkung bzw. Verarbeitung und dem Wiedereinlesen in die Ringleitung entsteht in jedem der Teilnehmer zwangsläufig eine gewisse Verzögerung. Diese Signalverzögerung ist besonders problematisch, wenn ein Teilnehmer verschiedene zeitlich miteinander korrelierte Quelldaten sendet, die von verschiedenen Teilnehmern empfangen werden, die an verschiedenen Stellen an der Ringleitung angeschlossen sind. Dies ist beispielsweise bei Geräten der Unterhaltungselektronik der Fall, die auf mehreren getrennten Kanälen, zwei im Falle von Stereophonie, wenigstens zwei Verstärker-Lautsprecher-Kombinationen mit Audiosignalen versorgen.

Die Verzögerung in jedem Teilnehmer kann technisch zwar auf wenige zehn Mikrosekunden beschränkt werden, bei mehreren im Netzwerk verteilten Lautsprechern, die durch mehrere andere Teilnehmer getrennt sind, können sich die Signalverzögerungen in den einzelnen Teilnehmern jedoch zu einer Größe summieren, durch die der Stereoeindruck oder andere Raumeindrücke.verlorengehen können oder sogar ein unangenehmer Höreindruck entsteht. Aber selbst wenn die Signalverzögerung so gering ist, dass keine Beeinträchtigung des Stereoeffektes wahrgenommen wird, wurden neuere Verfahren zur Erzeugung von dreidimensionalen Höreindrücken wie z. B. Pseudo-Stereophonie ausgeschlossen sein.

Die auftretenden Signalverzögerungen zu kompensieren, ist bei einem Kommunikationsnetz der beschriebenen Art kompliziert. Ein besonderer Vorteil dieses Netzwerkes liegt nämlich in seiner Flexibilität hinsichtlich der Leitungsverlegung und in der beiliegenden Einfügbarkeit weiterer Teilnehmer ohne schaltungstechnische Änderungen am übrigen System. Um diesen Vorteil nicht zu verlieren, hat man bisher in oberen Protokollschichten der Kommunikationssteuerung die Positionen der aktuellen Datenquelle und der dazugehörigen Datensenken bestimmt, wozu mit Hilfe von Steuerdaten eine Vielzahl von Nachrichten zwischen den Teilnehmern ausgetauscht werden mussten. Aus den auf diese Weise ermittelten Positionen kann die Anzahl der Teilnehmer zwischen der Datenquelle und den Datensenken bzw. zwischen den einzelnen Datensenken errechnet werden. Da die Signalverzögerung für jeden einzelnen Teilnehmer bekannt ist, können dann entsprechende Zwangsverzögerungen berechnet werden, mit denen die miteinander korrelierten Signale richtig wiedergegeben werden. Anschließend können diese Verzögerungen auf irgendeine bekannte Weise erzeugt werden, beispielsweise durch kurzes Zwischenspeichern der Quelldaten in den Datensenken.

Aufgabe der Erfindung ist es, ein Verfahren zu schaffen, mit dem Laufzeitverzögerungen von Quelldaten in einem ringförmigen Kommunikationsnetz auf einfache Weise kompensiert werden können.

Diese Aufgabe wird bei einem gattungsgemäßen Verfahren erfindungsgemäß dadurch gelöst, dass Laufzeitdifferenzen in den miteinander korrelierten Quelldaten auf der Basis dieses Zählwertes kompensiert werden.

Die Schnittstellen, die die einzelnen elektrischen oder elektronischen Geräte mit der Ringleitung verbinden, sind häufig identisch aufgebaut, so dass jeder Teilnehmer eine gleich große Verzögerung des über die Ringleitung übertragenen Datenstroms verursacht. In diesem Fall wird der Zählwert jeweils um Eins inkrementiert, ausgehend von einem Anfangswert von beispielsweise Null.

Die Erfindung ist aber auch in Fällen anwendbar, in denen die Teilnehmer den Datenstrom um verschiedene Zeitspannen verzögern. Dazu werden diese Zeitspannen entweder als ganzzahlige Vielfache einer festen Mindestverzögerung eingestellt, oder es wird eine kleine Zeiteinheit festgelegt, mit deren Vielfachen sich beliebige Verzögerungen mit genügender Genauigkeit genug angeben lassen. Jeder Teilnehmer inkrementiert den Zählwert dann um den Wert, der seiner Eigenverzögerung entspricht.

In der bevorzugten Ausführungsform der Erfindung wird die Verzögerung der Quelldaten empfangerseitig kompensiert, d.h. indem die Quelldaten bzw. irgendwelche daraus erzeugten Signale innerhalb von Teilnehmern verzögert werden, die die Quelldaten empfangen Alternativ ist aber auch eine senderseitige Kompensation möglich, indem die Quelldaten zeitlich versetzt gesendet werden, derart, daß sie die Empfänger zeitlich richtig korrelliert erreichen.

Der Zählwert wird bevorzugt durch einen Teilnehmer, der das Taktsignal erzeugt, nach dem sich alle anderen Teilnehmer richten, auf den Anfangswert gesetzt. Dieser Teilnehmer, nachfolgend auch Taktgenerator genannt, wird vorzugsweise der Teilnehmer, der in dem Kommunikationssystem als erstes eingeschaltet wird. Da dieser Teilnehmer einzigartig ist, entfallen komplizierte Entscheidungsprozesse, welcher Teilnehmer den Zählwert zurückzusetzen hat. Alternativ ist es aber auch möglich, daß beispielsweise der Teilnehmer, der die miteinander korrellierten Quelldaten sendet, den Zählwert zurücksetzt. Dies kann beispielsweise in Fällen zweckmäßig sein, in denen das Kommunikationssystem nur einen einzigen Teilnehmer enthält, der miteinander korrellierte Quelldaten sendet, etwa eine Radio/Kassettenrecorder/CD-Spieler-Kombination, und keine weiteren derartigen Teilnehmer vorgesehen werden.

Für die Berechnung der einzustellenden Zwangsverzögerungen ist außerdem die Kenntnis der Gesamtzahl der Teilnehmer im Kommunikationsnetz nützlich. Im Prinzip kann zwar auch von der maximal möglichen Gesamtzahl ausgegangen werden, wobei sich unter Umständen jedoch wesentlich größere Zwangsverzögerungen als nötig ergeben, die mehr Aufwand in Form von Zwischenspeichern oder dergleichen verlangen. Die Gesamtzahl der Teilnehmer kann auf einfache Weise durch den Taktgenerator bestimmt werden, und zwar aus dem von ihm empfangenen Zählwert. Im Falle, daß der Zählwert vom Taktgenerator auf Null gesetzt und von jedem nachfolgenden Teilnehmer um Eins inkrementiert wird, ist die Gesamtzahl der Teilnehmer der vom Taktgenerator empfangene Zählwert plus Eins. Die Gesamtzahl der Teilnehmer im Kommunikationsnetz kann vom Taktgenerator zyklisch über die Ringleitung verbreitet und/oder den Teilnehmern auf Anfrage mitgeteilt werden.

Die geringstmöglichen Zwangsverzögerungen in einer bestimmten Systemkonfiguration werden dann erreicht, wenn der jeweils letzte in einer Reihe von Quelldatenempfängern überhaupt nicht verzögert und die vor diesem Empfanger liegenden Empfanger entsprechend ihrem Abstand von dem letzten Empfänger verzögern. Um diese Berechnungen für beliebige Systemkonfigurationen und -änderungen durchführen zu können, werden außerdem Informationen zu den Positionen dieser Teilnehmer im Netzwerk benötigt. Diese Informationen werden bevorzugt vom Taktgenerator verwaltet und in regelmäßigen Zeitabständen über die Ringleitung verbreitet bzw. den Teilnehmern auf Anfrage mitgeteilt.

Auf diese Weise kann jeder Empfänger von mit anderen Quelldaten korrellierten Quelldaten die Informationen, die er zusätzlich zu dem Zählwert bzw. der Gesamtzahl der Teilnehmer benötigt, den zyklisch verbreiteten Informationen entnehmen oder vom Taktgenerator anfordern. Die Berechnung der einzustellenden Zwangsverzögerungen kann dann dezentral in den jeweiligen Empfängern korrellierter Quelldaten stattfinden.

Alternativ oder zusätzlich kann vorgesehen werden, daß ein Teilnehmer, der miteinander korrellierte Quelldaten an verschiedene Teilnehmer sendet, seine Position den Empfängern mitteilt, und/oder daß mehrere Teilnehmer, die miteinander korrellierte Quelldaten empfangen, ihre Positionen im Kommunikationsnetz und/oder ihren Einschaltzustand einander über die Ringleitung mitteilen. Auf diese Weise kann jeder Empfänger die von ihm benötigten Informationen erhalten, ohne sie beim Taktgenerator anfordern oder den vom Taktgenerator verbreiteten Informationen entnehmen zu müssen.

Das erfindungsgemäße Verfahren eignet sich insbesondere zur Kompensation von Laufzeitdifferenzen zwischen mehreren Datensenken zugeführten Audiodaten, ist aber nicht darauf beschränkt. Beispielsweise können Laufzeitdifferenzen bei Signalen kompensiert werden, die von Sensoren zur Überwachung der Betriebszustände von Kraftfahrzeugkomponenten über das Netzwerk übertragen werden, um einfache Online-Vergleiche dieser Signale zu ermöglichen.

Die Ringleitung wird vorzugsweise durch Lichtleiter gebildet, die je zwei Teilnehmer miteinander verbinden und die hohe Datenübertragungsgeschwindigkeiten ermöglichen Im Falle eines Kommunikationssystems in einem Kraftfahrzeug ist außerdem das geringe Gewicht von Lichtleitern besonders vorteilhaft. Die Erfindung ist aber auch für rein elektrische ringförmige Kommunikationsnetze geeignet, bei denen die Leitungsabschnitte beispielsweise Koaxialkabel sind.

Die Erfindung wird nachfolgend anhand eines Ausführungsbeispiels unter Bezugnahme auf die Zeichnung erläutert; in dieser zeigt:
- Fig. 1: ein ringförmiges Kommunikationsnetz mit sechs Teilnehmern, und
- Fig. 2: eine detailliertere Ansicht des Aufbaus eines einzelnen Teilnehmers, in der schematisch das bei der Datenübertragung verwendete Bitgruppenformat eingezeichnet ist

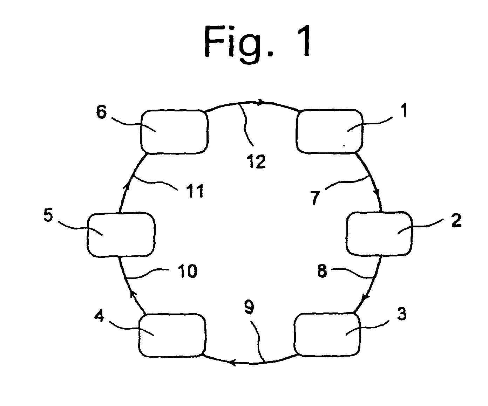

Fig. 1 zeigt ein ringförmiges Netzwerk mit einem als Taktgenerator arbeitendem Teilnehmer 1 und fünf weiteren Teilnehmern 2, 3, 4, 5 und 6. Die sechs Teilnehmer 1 bis 6 sind über Lichtleiterabschnitte 7 bis 12 ringförmig miteinander verbunden. Die Lichtleiterabschnitte 7 bis 12 bilden somit eine Ringleitung zur Datenübertragung zwischen den verschiedenen Teilnehmern. Die physikalische Richtung der Datenübertragung ist durch Pfeile auf den Lichtleiterabschnitten 7 bis 12 dargestellt.

Der Teilnehmer 1 sei beispielsweise ein Radioempfänger, die Teilnehmer 4 sei ein CD-Spieler, und die Teilnehmer 2, 3, 5 und 6 seien Aktivlautsprecher. Ein solches Netzwerk kann beispielsweise in ein Kraftfahrzeug eingebaut werden und zusätzlich zu den vorstehend erwähnten Geräten weitere Geräte enthalten. Ein solches komplexes Multi-Media-Netzwerk enthält außerdem beispielsweise eine Bedien- und Anzeigeeinheit, ein Telefon, ein Telefaxgerät, ein Navigationssystem, eine Steuereinheit für eine Klimaanlage, ein Überwachungsgerät für den Reifenluftdruck sowie eine Videokamera.

Diese Geräte kommunizieren allein über die aus den Lichtleiterabschnitten gebildete Ringleitung miteinander. Dies ermöglicht ein Datenübertragungsformat, welches eine getaktete Folge von einzelnen Bitgruppen gleicher Länge vorschreibt, in denen für Quellund Steuerdaten jeweils bestimmte Bitpositionen reserviert sind, wobei die für die Quelldaten reservierten Bereiche innerhalb einer Bitgruppe einen zusammenhängenden Bereich bilden. Die Quell- und Steuerdaten werden in einem zu einem Taktsignal synchronen kontinuierlichen Datenstrom über die Ringleitung übertragen. Das Taktsignal wird von einem einzigen Teilnehmer generiert. Alle anderen Teilnehmer synchronisieren sich auf dieses Taktsignal. Davon zu unterscheiden sind rein asynchrone Datenübertragungsverfahren wie paketorientierte Datenübertragungsverfahren, z.B. ATM-Verfahren.

Der für die Quelldaten reservierte Bereich einer Bitgruppe ist in mehrere Teil-Bitgruppen gleicher Länge unterteilt, die jeweils einen Datenkanal für Quelldaten bilden. In dem in Fig. 1 gezeigten Beispiel sind zwei Datenkanäle für die Stereokanäle des Radioempfängers 1 bzw. des CD-Spielers 2 reserviert, wobei z.B. die Lautsprecher 2 und 5 dem rechten Stereokanal zugeordnet sind und die Lautsprecher 3 und 6 dem linken Stereokanal zugeordnet sind. Die Lautsprecher 2 und 3 sind beispielsweise in den vorderen Türen eines Kraftfahrzeugs eingebaut, und die Lautsprecher 5 und 6 sind im hinteren Wagenteil eingebaut

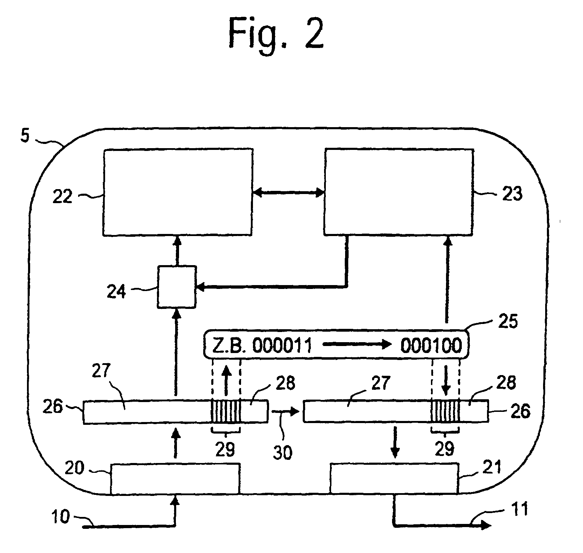

Fig. 2 zeigt einen der in Fig. 1 gezeigten Teilnehmer detallierter in diesem Beispel den Teilnehmer 5. Er umfaßt eine Empfangsschaltung 20, die mit dem Lichtleiterabschnitt 10 verbunden ist und einen optoelektronischen Wandler zur Umwandlung optischer in elektrische Signale enthält, eine Sendeschaltung 21, die mit dem Lichtleiterabschnitt 11 verbunden ist und einen optoelektronischen Wandler zur Umwandlung elektrischer in optische Signale enthält, ein elektronisches Gerät 22, das im Falle des Teilnehmers 5 eine Verstärker-Lautsprecher-Kombination ist, einen Mikrocontroller 23, d.h. einen Mikroprozessor für spezielle Steueraufgaben, eine steuerbare Verzögerungsschaltung 24, die Zwischenspeicher enthält, und einen Inkrementierer 25.

Über der Empfangsschaltung 20 und der Sendeschaltung 21 ist außerdem schematisch jeweils eine empfangene bzw. gesendete Bitgruppe 26 eingezeichnet. Jede Bitgruppe 26 enthält unter anderem einen Bereich 27 für Quelldaten, einen Bereich 28 für Steuerdaten und ein Datenfeld 29, das aus sechs Bits besteht, die einen Positionszählwert darstellen.

Die aus dem Lichtleiterabschnitt 10 empfangene Bitgruppe 26 wird mit einer festen Verzögerung von der Empfangsschaltung 20 an die Sendeschaltung 21 übergeben und wieder in den Lichtleiterabschnitt 11 gesendet. Zwischen der Empfangsschaltung 20 und der Sendeschaltung 21 durchläuft die Bitgruppe 26 irgendeine Schaltung, die selektive Lese- und/oder Schreibzugriffe auf die Daten in der Bitgruppe 26 ermöglicht. Geeignete Schaltungen dafür sind beispielsweise Schieberegister, Puffer oder FIFO-Schaltungen. Die Bitgruppe 26 durchläuft den Teilnehmer 5 größtenteils unverändert oder transparent, wie mit einem Pfeil 30 dargestellt.

Der für die Verstärker-Lautsprecher-Kombination 22 bestimmte Teil der Quelldaten aus dem Bereich 27 der Bitgruppe 26 wird der Verstärker-Lautsprecher-Kombination 22 über die Verzögerungsschaltung 24 zugeführt. Die Daten aus dem Datenfeld 29 werden dem Inkrementierer 25 zugeführt, der den Positionszählwert um Eins inkrementiert und dann wieder in das Datenfeld 29 einfügt, bevor dieses gesendet wird. Der Positionszählwert wird von einem der Teilnehmer 1 bis 6, und zwar demjenigen, der als Taktgenerator arbeitet, bei jedem Durchlauf auf "000000" gesetzt. Dies sei in diesem Beispiel der Teilnehmer 1, so daß der Teilnehmer 5 den Positionszählwert "000011" empfangt und den Positionszählwert "000100" sendet. Dem Teilnehmer 5 ist der gesendete Positionszählwert "000100" oder dezimal "4" zugeordnet, und dieser Positionszählwert wird dem Mikrocontroller 23 zur Auswertung zugeführt. Der Mikrocontroller 23 kann außerdem Steuerdaten über den Bereich 28 empfangen bzw. senden und ist mit der Verstärker-Lautsprecher-Kombination 22 sowie der Verzögerungsschaltung 24 verbunden.

Die übrigen Teilnehmer im Netzwerk haben im wesentlichen den gleichen Aufbau wie der in Fig. 2 gezeigte Teilnehmer 5, außer daß manche Teilnehmer Quelldaten in den Bereich 27 schreiben. Dies sind in diesem Fall die Teilnehmer 1 und 4, die Zweikanal-Audiodaten senden. Jeder Teilnehmer 1 bis 6 verzögert eine das Netzwerk durchlaufende Bitgruppe 26 um die gleiche Zeitspanne T, die im wesentlichen durch die Zeiten bestimmt wird, die für die optoelektronische Signalwandlung, die Zwischenverstärkung, die Lese- bzw. Schreiboperationen sowie die Sicherstellung der Synchronisation benötigt werden. In einem typischen Kommunikationsnetz mit Ringstruktur und Lichtleitern beträgt die Zeitspanne T ungefähr 44 µs. Bei 64 möglichen Teilnehmern, entsprechend den sechs Bits des Datenfeldes 29, ergibt sich eine Gesamtverzögerung bei einem Durchlauf durch das Netzwerk von ca. 2,8 ms.

Zur Beschreibung des Verfahrens zum Ausgleich der unterschiedlichen Zeiten, mit denen die Audiodaten an den einzelnen Lautsprechern 2, 3, 5 und 6 ankommen, wird sowohl auf Fig. 1 als auch auf Fig. 2 Bezug genommen.

Angenommen, daß der Radioempfänger 1 gerade Audiodaten sendet, die von den Lautsprechern 2, 3, 5 und 6 empfangen werden Wie oben beschrieben, empfängt der Mikrocontroller 23 des Lautsprechers 5 den Positionszählwert "4". Außerdem empfängt er über den Bereich 28 für Steuerdaten folgende zyklisch auf dem Netzwerk verbreiteten Informationen vom Taktgenerator: Den Positionszählwert des Taktgenerators, welcher "0" ist; die Gesamtzahl der Teilnehmer im Netzwerk, welche der Positionszählwert, den der Taktgenerator vom Lautsprecher 6 erhält, plus 1 ist, d.h. die Gesamtzahl "6"; und die Positionen der übrigen Lautsprecher 2, 3 und 6 im Netzwerk, d.h. die Positionen "1", "2" und "5".

Mit diesen Informationen berechnet der Mikrocontroller 23, daß der in der Übertragungsrichtung letzte Lautsprecher vor dem sendenden Teilnehmer, dem Radioempfänger 1, der Lautsprecher 6 ist, und daß sich der Lautsprecher 5 eine Position vor dem Lautsprecher 6 befindet. Daraus berechnet der Mikrocontroller 23, daß die Audiodaten im Lautsprecher 5 um die Zeitspanne T verzögert werden müssen, und steuert die Verzögerungsschaltung 24 vor der Verstärker-Lautsprecher-Kombination 22 entsprechend.

Auf ähnliche Weise wird im Lautsprecher 3 ermittelt, daß die Audiodaten um eine Zeitspanne 3T zu verzögern sind. Im Lautsprecher 2 werden die Audiodaten entsprechend um die Zeitspanne 4T verzögert, und der Lautsprecher 6 gibt die Audiodaten unverzögert wieder. Die Audiodaten werden dann von allen Lautsprechern 2, 3, 5 und 6 in richtiger zeitlicher Korrellation wiedergegeben.

Die Positionsinformationen, die für die Berechnung der einzustellenden Verzögerung benötigt werden, basieren jeweils ganz oder teilweise auf dem in der Bitgruppe verankerten und von Teilnehmer zu Teilnehmer weitergereichten Positionszählwert. Der Positionszählwert wird automatisch laufend aktualisiert, so daß der Eintritt eines neuen Teilnehmers im laufenden Betrieb des Systems möglich ist, ohne daß falsche Ringpositionen auftreten. Sonstige Informationen, etwa über den Typ eines bestimmten Teilnehmers, können zum Beispiel bei der Initialisierung des Systems bzw. beim Einoder Ausschalten eines Teilnehmers aktualisiert werden. Daher können sowohl die aktuelle Klangquelle als auch die physische Systemkonfiguration jederzeit nach Belieben geändert werden, ohne komplizierte Netzverwaltungsroutinen zu benötigen.

Wenn beispielsweise die Lautsprecher 5 und 6 aus dem System entfernt werden, wobei der Ring zwischen den Teilnehmern 4 und 1 wieder zu schließen ist, empfangen die Mikrocontroller der verbleibenden Lautsprecher 2 und 3 basierend auf den automatisch laufend aktualisierten Positionsinformationen den gleichen Positionszählwert, erhalten aber geänderte Positionsdaten vom Taktgenerator 1. Mit diesen neuen Daten berechnet der Mikrocontroller im Lautsprecher 3, daß dieser der letzte Lautsprecher vor dem Sender der Audiodaten ist, welcher nicht zu verzögern braucht, und der Lautsprecher 2 verzögert die Klangwiedergabe um die Zeitspanne T.

Wenn die Lautsprecher 5 und 6 wieder hinzugefügt werden stellt sich basierend auf den automatisch laufend aktualisierten Positionsinformationen automatisch wieder der vorherige Zustand ein.

Wenn als aktuelle Klangquelle statt des Radioempfängers 1 der CD-Spieler 4 ausgewählt wird, wobei der Radioempfänger 1 Taktgenerator bleibt, sofern er nicht ausgeschaltet wird, wird der Lautsprecher 3 der letzte Lautsprecher vor dem Sender der Audiodaten. Der Lautsprecher 3 verzögert dann nicht, der Lautsprecher 2 verzögert um die Zeitspanne T, der Lautsprecher 6 verzögert um die Zeitspanne 3T und der Lautsprecher 5 verzögert um die Zeitspanne 4T. Man beachte, daß in diesem Fall der Taktgenerator zwischen zwei Lautsprechern liegt. Ob dieser Umstand bei der Berechnung der Verzögerungszeitspannen berücksichtigt werden muß, hängt von dem im Einzelfall verwendeten Berechnungsmodus ab.

Mit Ausnahme des Prozesses zur Ermittlung, welcher der Teilnehmer in der Übertragungsrichtung auf der Ringleitung der letzte Lautsprecher vor dem gerade ausgewählten Sender von Audiodaten ist, sind die oben erwähnten Berechnungen sehr einfach. Sie verlangen keine besondere "Intelligenz" in Form eines programmgesteuerten Mikroprozessors, sondern können auch mit Hilfe von Logikschaltungen durchgeführt werden, d.h. in Hardware. Daher benötigen die Lautsprecher 2, 3, 5 und 6 nicht unbedingt einen Mikrocontroller. Vielmehr können die erwähnten Berechnungen ganz oder teilweise vom Mikrocontroller des Taktgenerators durchgeführt werden, der im allgemeinen die Informationen zu den Positionen aller Teilnehmer im Netzwerk verwaltet, die im allgemeinen noch für weitere Zwecke benötigt werden. Der Taktgenerator kann die notwendigen Verzögerungen an den im System befindlichen Lautsprechern einstellen, indem er deren Verzögerungsschaltungen direkt ansteuert. Dies kann beispielsweise mit Hilfe von speziellen Befehlscodes erfolgen, die keiner Interpretation durch den Befehlsinterpreter eines Mikrocontrollers bedürfen, sondern in festverdrahteten Befehlsdecodierern der Lautsprecher erkannt werden.

Eine weitere Möglichkeit, den ohnehin relativ geringen Berechnungs- und Mitteilungsaufwand zu verringern, besteht darin, daß die Lautsprecher oder andere Teilnehmer, die miteinander korrellierte Daten wie z.B Audiodaten empfangen, direkt miteinander kommunizieren, um Informationen über ihre Positionen im Netzwerk auszutauschen. In diese Kommunikation kann auch der Sender der korrellierten Daten mit einbezogen werden.

## Patentansprüche

1. Verfahren zur Kompensation von Lauftzeitverzögerungen in einem Kommunikationsnetz mit mehreren Teilnehmern, die jeder mit einer Ringleitung zur gemeinsamen Übertragung von digitalen Quell- und Steuerdaten in einem zu einem Taktsignal synchronen Datenstrom verbunden sind, wobei die Quell- und Steuerdaten in einem Format übertragen werden, welches eine getaktete Folge von einzelnen Bitgruppen gleicher Länge vorschreibt, die Teil-Bitgruppen enthalten, die jeweils einen Datenkanal für Quell- oder Steuerdaten bilden, und wobei wenigstens zwei Teilnehmer, die an verschiedenen Stellen mit der Ringleitung verbunden sind, Quelldaten empfangen, die von einem der Teilnehmer auf verschiedenen Datenkanälen gesendet werden und die miteinander korreliert sind, wobei bestimmte Bitpositionen (29) in jeder Bitgruppe (26) für einen Zählwert reserviert werden, der von Teilnehmer zu Teilnehmer (1, 2, 3, 4, 5, 6) weitergereicht wird, wobei der Zählwert durch einen der Teilnehmer stets auf einen festen Anfangswert gesetzt und durch jeden nachfolgenden Teilnehmer entlang der Ringleitung (7, 8, 9, 10, 11, 12) inkrementiert wird,
**dadurch gekennzeichnet, dass** Laufdifferenzen in den miteinander korrelierten Quelldaten auf der Basis dieses Zählwertes kompensiert werden.

2. Verfahren nach Anspruch 1,
**dadurch gekennzeichnet, dass** die Quell- und Steuerdaten durch jeden Teilnehmer um die gleiche Zeitspanne verzögert werden und dass der Zählwert jeweils um Eins inkrementiert wird.

3. Verfahren nach Anspruch 1 oder 2,
**dadurch gekennzeichnet, dass** Laufzeitdifferenzen in den miteinander korrellierten Quelldaten durch eine entsprechend zeitliche Verzögerung von Quelldaten kompensiert werden, die auf bestimmten Datenkanälen empfangen werden.

4. Verfahren nach einem der vorhergehenden Ansprüche,
**dadurch gekennzeichnet, dass** der Zählwert durch einen Teilnehmer, der das Taktsignal erzeugt, auf den Anfangswert gesetzt wird.

5. Verfahren nach Anspruch 4,
**dadurch gekennzeichnet, dass** der Teilnehmer, der das Taktsignal erzeugt, aus dem von ihm empfangenen Zählwert die Gesamtzahl der Teilnehmer im Kommunikationsnetz bestimmt und die Gesamtzahl der Teilnehmer in regelmäßigen Zeitabständen über die Ringleitung verbreitet und/oder den Teilnehmern auf Anfrage mitteilt.

6. Verfahren nach Anspruch 4 oder 5,
**dadurch gekennzeichnet, dass** der Teilnehmer, der das Taktsignal erzeugt, Informationen zu den Positionen aller Teilnehmer im Kommunikationsnetz verwaltet und diese Informationen zyklisch über die Ringleitung verbreitet und/oder den Teilnehmern auf Anfrage mitteilt.

7. Verfahren nach einem der vorhergehenden Ansprüche,
**dadurch gekennzeichnet, dass** ein Teilnehmer, der miteinander korrellierte Quelldaten an verschiedene Teilnehmer sendet, seine Position im Kommunikationsnetz diesen Teilnehmern über die Ringleitung mitteilt.

8. Verfahren nach einem der vorhergehenden Ansprüche,
**dadurch gekennzeichnet, dass** mehrere Teilnehmer, die miteinander korrelierte Quelldaten empfangen, ihre Positionen im Kommunikationsnetz und/oder ihren Einschaltzustand einander über die Ringleitung mitteilen.

9. Verfahren nach einem der vorhergehenden Ansprüche,
**dadurch gekennzeichnet, dass** als miteinander korrelierte Quelldaten Mehrkanal-Audiodaten verwendet werden.

10. Verfahren nach einem der vorhergehenden Ansprüche,
**dadurch gekennzeichnet, dass** als Ringleitung Lichtleiter verwendet werden, die je zwei Teilnehmer miteinander verbinden.

11. Verwendung des Verfahrens nach einem der vorhergehenden Ansprüche bei einem Kommunikationssystem in einem Kraftfahrzeug.

## Claims

1. Method of compensating for propagation delays in a communication network, with a plurality of subscribers which are each connected to a loop for common transmission of digital source data and control data in a data stream synchronous with a clock signal, wherein the source data and control data are transmitted in a format which prescribes a pulsed sequence of individual bit groups of identical length containing partial bit groups each forming a data channel for source data or control data, and wherein at least at two subscribers connected to the loop at different locations receive source data which are transmitted by one of the subscribers on different data channels and are correlated with one another, specific bit positions (29) being reserved in each bit group (26) for a numerical value relayed from subscriber to subscriber (1, 2, 3, 4, 5, 6), wherein the numerical value is always to a fixed initial value and incremented by each successive subscriber along the loop (7, 8, 9, 10, 11, 12), **characterised in that** propagation time differences in the mutually correlated source data are compensated for on the basis of this numerical value.

2. Method as claimed in Claim 1, **characterised in that** the source data and control data are delayed by the same time interval by each subscriber, and that the numerical value is incremented by one in each case.

3. Method as claimed in Claim 1 or 2, **characterised in that** propagation time differences in the mutually correlated source data are compensated for by a corresponding time delay of source data received on specific data channels.

4. Method as claimed in one of the preceding claims, **characterised in that** the numerical value is set to the initial value by a subscriber which generates the clock signal.

5. Method as claimed in Claim 4, **characterised in that** the subscriber which generates the clock signal determines the total number of subscribers in the communication network from the numerical value received by it and communicates the total number of subscribers at regular time intervals via the loop and/or communicates the total number to the subscribers on request.

6. Method as claimed in Claim 4 or 5, **characterised in that** the subscriber which generates the clock signal manages information concerning the positions of all of the subscribers in the communication network and disseminates this information cyclically via the loop and/or communicates the information to the subscribers on request.

7. Method as claimed in one of the preceding claims, **characterised in that** a subscriber which transmits mutually correlated source data to various subscribers communicates its position in the communication network to these subscribers via the loop.

8. Method as claimed in one of the preceding claims, **characterised in that** a plurality of subscribers receiving the mutually correlated source data communicate their positions in the communication network and/or their on state to one another via the loop.

9. Method as claimed in one of the preceding claims, **characterised in that** multi-channel audio data are used as mutually correlated source data.

10. Method as claimed in one of the preceding claims, **characterised in that** optical fibres which each connect two subscribers to one another are used as the loop.

11. Use of the method as claimed in one of the preceding claims in a communication system in a motor vehicle.

## Revendications

1. Méthode de compensation du délai de propagation dans un réseau de communication avec plusieurs participants qui sont chacun reliés à une ligne en boucle pour la transmission commune de données digitales source et pilote dans un flot de données synchrone avec un signal d'horloge, sachant que les données source et pilote sont transmises dans un format, lequel dicte une séquence à cycle fixe de groupes isolés de bits de même longueur comprenant des groupes de bits en tranches qui forment à chaque fois un canal de données pour des données source ou pilote, et sachant qu'au moins deux participants qui sont reliés à différents emplacements avec la ligne en boucle reçoivent des données source qui sont émises par un des participants sur différents canaux de données et qui sont en corrélation les unes avec les autres, certaines positions de bits (29) dans chaque groupe de bits (26) étant réservées pour une valeur de comptage qui est transmise de participant à participant (1, 2, 3, 4, 5, 6), sachant que la valeur de comptage est toujours mise par un des participants sur une valeur initiale fixe et qu'elle est incrémentée par chaque participant subséquent le long de la ligne en boucle (7, 8, 9,10, 11, 12), **caractérisée en ce que** les différences de propagation dans les données source en corrélation les unes avec les autres sont compensées sur la base de cette valeur de comptage.

2. Méthode selon la revendication 1, **caractérisée en ce que** les données source et pilote sont retardées du même laps de temps par chaque participant et **en ce que** la valeur de comptage est incrémentée à chaque fois de un.

3. Méthode selon l'une des revendications 1 ou 2, **caractérisée en ce que** les différences de durée de propagation dans les données source qui sont en corrélation les unes avec les autres sont compensées par un retard temporel correspondant de données source qui sont reçues sur certains canaux de données.

4. Méthode selon l'une des revendications précédentes, **caractérisée en ce que** la valeur de comptage est mise sur la valeur initiale par un participant qui génère le signal d'horloge.

5. Méthode selon la revendication 4, **caractérisée en ce que** le participant qui génère le signal d'horloge détermine, à partir de la valeur de comptage qu'il a reçue, le nombre total des utilisateurs dans le réseau de communication et répand la totalité des participants à intervalles réguliers via la ligne en boucle et/ou la communique sur demande aux participants.

6. Méthode selon la revendication 4 ou 5, **caractérisée en ce que** le participant qui génère le signal d'horloge gère des informations relatives aux positions de tous les participants dans le réseau de communication et répand ces informations de manière cyclique par la ligne en boucle et/ou les communique sur demande aux participants.

7. Méthode selon l'une des revendications précédentes, **caractérisée en ce qu'**un participant qui transmet des données source en corrélation les unes avec les autres à différents participants, communique sa position dans le réseau de communication à ces participants par la ligne en boucle.

8. Méthode selon l'une des revendications précédentes, **caractérisée en ce que** plusieurs participants qui reçoivent des données source en corrélation les unes avec les autres, se transmettent réciproquement leur position dans le réseau de communication et/ou leur état de connexion par le biais de la ligne en boucle.

9. Méthode selon l'une des revendications précédentes, **caractérisée en ce que** des données audio à canaux multiples sont utilisées comme données source en corrélation les unes avec les autres.

10. Méthode selon l'une des revendications précédentes, **caractérisée en ce que** des conducteurs de lumière sont utilisés comme ligne en boucle, conducteurs qui relient à chaque fois deux participants.

11. Utilisation de la méthode selon l'une des revendications précédentes pour un système de communication dans un véhicule automobile.
